# EUROPEAN PATENT APPLICATION

(11) **EP 1 707 312 A1**
(43) Date of publication of application: **04.10.2006**
(21) Application number: 04821209.6
(22) Date of filing: 09.12.2004
(51) Int. Cl.: B24B 1/00, B24B 19/00, B24D 3/02, B24D 3/28, B24D 11/00, C09K 3/14

(54) **POLISHING METHOD AND POLISHING FILM USED IN SUCH POLISHING METHOD**

(30) Priority: 23.01.2004 JP 2004015237
(71) Applicant: Bando Chemical Industries, Ltd., Kobe-shi, Hyogo652-0883 (JP)
(72) Inventor: NAKAHARA, Masataka, Bando Chemical Industries,Ltd., Hyogo-ku, Kobe-shi, Hyogo 6520883 (JP); MAEYAMA, Katsuaki, Bando Chemical Industries, Ltd., Hyogo-ku, Kobe-shi, Hyogo 6520883 (JP); INOUE, Shigeki, Bando Chemical Industries, Ltd., Hyogo-ku, Kobe-shi, Hyogo 6520883 (JP)
(74) Representative: Wablat, Wolfgang
(86) International application number: PCT/JP2004/018387
(87) International publication number: WO 2005/070618

(57) **Abstract**

Disclosed is a polishing method, which is effective to prevent lowering of the polishing efficiency in the later stage of polishing. The polishing method is **characterized in that** polishing is performed while so adjusting a polishing liquid as to have a pH of not less than 2 and less than 7.

## Description

### FIELD OF THE INVENTION

The present invention relates to a polishing method in which an object is polished with a polishing fluid interposed between a polishing film and the object, and more particularly a method of polishing an end face of a connection portion of an optical fiber and a polishing film for use in polishing the end face.

### BACKGROUND OF THE INVENTION

Hitherto, optical connectors that are easy to be detached have been widely used for connection of optical fibers in an optical fiber communication network. For connection, a so-called physical contact, a technique involving direct abutting of optical connector ferrules is used, and optical characteristics (such as decay) of the connection portions depend on machined characteristics and machining accuracy. For optical connector ferrule members, those of zirconia having an elongated cylindrical shape are widely used, for example, for an one-to-one connection between corewire s of optical fibers, in which a minute through-hole extends in each cylindrical ferrule member between the center of a circular end face of a first side to the center of a circular end face of a second side, and each core wire is placed in this through-hole and bonded into an integral unit. Then, an optical connector ferrule member has a side of the end face of its optical fiber core wire, that is, a side to be connectedbeing subjected to precision polishing to have a given shape such as a spherical shape, and is press contacted with an end face of the similarly machined opposite optical connector ferrule member so as to have the end faces of the core wires of the optical fibers face each other. If those connection portions have irregular surfaces, a gap or clearance is caused. This may result in excessive decay that is a fatal flaw.
The polishing of the end faces of the optical connector ferrule members are performed by plural polishing steps such as rough finishing, medium finishing and final finishing. Among those polishing steps, in each of polishing steps before the final finishing, there is usedapolishing filmhavinga substrate and a polishing material layer thereon. The polishing material layer has diamond abrasive particles having a particle size corresponding to each finishing step and fixed thereto by a binder, and polishing is hitherto performed by interposing pure water or ion exchange water as a polishing fluid between the polishing film and the end face of an optical connector ferrule member (Patent Document 1 mentioned below).
Patent Document 1: Official Gazette of Japanese Patent Application Laid-open No. Hei-9-248771

In the polishing processes, such as those for polishing end faces of optical connector ferrule members using a polishing film, as the polishing proceeds to a later stage, a polishing rate or efficiency per unit time is greatly deteriorated compared with an initial stage, and therefore it is difficult to finish with an end face having only a small surface roughness while having no irregular portion, within a given time.

### SUMMARY OF THE INVENTION

### Problems to be Solved by the Invention

In consideration of the above, it is an object of the present invention to provide a polishing method that is capable of preventing deterioration of the polishing efficiency in a later polishing stage and achieving polishing with a required surface roughness for each polishing step.

### Means of Solving the Problems

Aninvestigation was made on factors causing deterioration of the polishing efficiency in a later polishing stage, and it was found that the polishing efficiency is not deteriorated even in a later polishing stage by making a polishing fluid acidic during it is used for polishing, and hence the present invention has been achieved. According to the present invention, there is provided a polishing method, in which polishing is performed while keeping a pH of a polishing fluid in a range of not less than 2 but less than 7 during it is used for polishing.

### Effects of the Invention

According to the present invention, it is possible to provide a polishing method that is capable of preventing deterioration of the polishing efficiency, as well as achieving polishing to have a surface roughness required for each step.

### Brief Description of the Drawings

FIG. 1 is a model view illustrating a polishing method according to one embodiment.
FIGS. 2 are cross sectional views each illustrating a polishing film of the embodiment.

### Description of the Reference Codes

1: polishing film
2: substrate
3: polishing material layer

### Best Mode for Carrying out the Invention

The description will be made for a preferred embodiment of the present invention with reference to the drawings attached hereto.

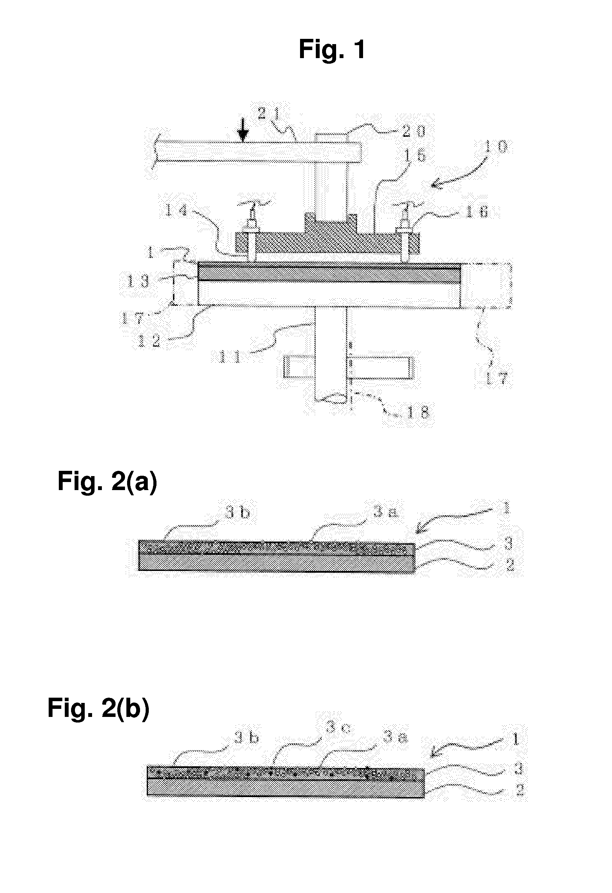

In this embodiment, a polishing film 1 has a film-like substrate 2 and a polishing material layer 3 formed thereon, which has abrasive particles 3a and a binder resin 3b, as illustrated in FIG. 2 (a) . An optical connector ferrule member 14 is polished by the polishing film 1 and an optical connector end-face polishing machine 10 of FIG. 1. The optical connector end-facepolishingmachine 10 includes adrivingunit (not shown), a polishing platen 12 having a substantially disc shape that is driven by the driving unit to be rotated about its rotational shaft 11 that is revolved about an orbital axis 18, enabling the polishing platen 12 to be rotationally moved within a revolving range 17, and an elastic pad 13 mounted on the polishing platen 12. The optical connector end-face polishing machine 10 includes a support rod 20 secured to an arm 21, and a ferrule pressing jig 15 that is secured to a lower end of the support rod 20 so as not to be rotated accompanied by rotation of the polishing platen 12 and has a member for holding an optical connector ferrule member.

In order topolish an end face of the optical connector ferrule member 14 by the use of the optical connector end-face polishing machine 10, the polishing film 1 is first mounted on the elastic pad 13 with the polishing material layer 3 facing upward. Then, the optical connector ferrule member 14 is placed on the ferrule holding member of the ferrule pressing jig 15 with an end face to be polished facing downward, and a load is applied onto the arm 21 in a direction represented by an arrow in FIG. 1, thereby pressing the end face of the optical connector ferrule member 14 onto the surface of the polishing material layer 3 of the polishing film 1, while at the same time rotating and revolving the polishing film 1 along with the polishing platen 12. Whereby, the end face of the optical connector ferrule member 14 is reciprocatingly moved on the polishing material layer 3 between its outer periphery near the outer circumference of the polishing platen and its center-periphery and thus is polished into a convex spherical shape by the polishing material layer 3.

Then, by using, as a polishing fluid for polishing, for example, ion exchange water having a pH adjuster previously added thereto to have a pH being in a range of not less than 2 but less than 7, it is possible to prevent deposition (adhesion) of powders caused by the polishing of the optical connector ferrule member 14 or abrasive particles separating off from the polishing film 1 and hence prevent deterioration of the polishing efficiency.

In a case where the pH of the polishing fluid is less than 2 during it is used for polishing, the acidity is too high, which results in a roughened surface of the optical connector ferrule member 14. In a case where the pH is not less than 7, the polishing efficiency is deteriorated and hence satisfactory polishing cannot be made. This results in rough finish.

Excluding halogen-containing acid that adversely affects on an optical fiber core wire or an optical connector ferrule member, any materials may be used for the pH adjuster, but preferable is a substance containing a carboxyl group, such as ethylenediaminetetracetic acid, oxalic acid, tartaric acid, quinaldic acid, maleic anhydride and citric acid.

As another embodiment, as illustrated in FIG. 2(b), it can be cited a polishing method that involves polishing by the use of the polishing film 1 that has the film-like substrate 2 and the polishing material layer 3 formed thereon, in which the polishing material layer 3 contains the abrasive particles 3a and the binder resin 3b, while keeping a pH of a polishing fluid in a range of not less than 2 but less than 7 during it is used for polishing. That is, it is possible to provide a polishing fluid whose pH is not less than 2 but less than 7 by having a pH adjuster dissolving into the ion exchange water.

Herein, the substrate 2 has a proper stiffness and preferably has good adhesiveness to the polishing material layer 3, and for example, it can be cited a synthetic resin film such as polyester film, polyamide and polyimide and those subjected to a treatment for increasing adhesiveness, such as a chemical treatment, a corona treatment and a primer treatment.

The polishing material layer 3 has abrasive particles made up of diamond, alumina or the like having a given particle size which can be selected between 10 µm and 0.3 µm depending on the polishing step for such as rough finishing or medium finishing, and those abrasive particles are dispersed along with a pH adjuster in a solution of polyester, polyurethane or the like that acts as a binder. Then, these are coated on the substrate 2 by a conventional coating method such as roll coater or screen printing and dried by oven or natural drying. Thus, the polishing material layer 3 is obtained.
A polishing material layer contains abrasive particles preferably in a range of 20 to 60 % by volume and more preferably in a range of 25 to 50 % by volume.

A pH adjuster to be added in the polishing material layer 3 is preferably, as mentioned above, a substance containing a carboxyl group such as ethylenediaminetetracetic acid, oxalic acid, tartaric acid, quinaldic acid, maleic anhydride and citric acid, excluding halogen-containing acid, alkali metal (Na, K) salt of organic acid.

From the standpoints of excellent performances to lower the pH even with a small amount to be added and to keep the effect of lowering the pH due to low solubility against water or gradual dissolution into water, ethylenediaminetetracetic acid can be cited as a more preferable pH adjuster.
Further, a preferable ethylenediaminetetracetic acid is in a powder form with a particle size of not more than 60 µm and is varied in particle size within 20 µm since it is uniformly dispersed in a polishing material layer an keeps its effect even after the polishing material layer is worn away.

The present invention was described by taking, for example, the methods and materials of the above embodiment, but no limitation is intended thereto. If necessary, it is possible to use various auxiliary agents and additives, such as a dispersing agent, a coupling agent, a surfactant, a lubricant agent, an antifoam agent and a coloring agent.

### EXAMPLES

The present invention will be further described by citing the following examples, which are not intended to limit the present invention.

### (Example 1)

1. 3 wt. part of a dispersion agent and 480 wt. part of diamond abrasive particles (IRM Series, manufactured by Tomei Diamond Co., Ltd., nominal particle size: 3 µm) were mixed with 500 wt. part of a cyclohexane solvent by a dispersing machine using zirconia beads; 100 wt. part of polyester resin (VYLON 280, manufactured by Toyobo Co. Ltd.) and 33 wt. part of isocyanate (SUMIDUR L, manufactured by Sumika Bayer Urethane Co., Ltd.) were added thereto and further mixed; and a base mixture was obtained by adjusting a solid content concentration to 31% with solvent. Ethylenediaminetetracetic acid as a pH adjuster was added to the base mixture to reach a concentration of 10 wt.%, mixed and stirred. Thus, a coating liquid for a polishing material layer was obtained.
By the use of a PET film (Easily Adherable HPE Type, manufactured by Teijin DuPont Films Japan Limited) having a thickness of 75 µm as a substrate, the coating liquid was coated thereon by a roll coater machine, dried by natural drying, and cross-linked for 24 hrs. at 100°C. Thus, a polishing film with a polishing material layer having a thickness of 7 µm was obtained.
The thus obtained polishing film was mounted on a polishing platen of a commercially available optical connector end-face polishing machine (OFL 15, manufactured by Seiko Instruments Inc.) via an elastic pad; 12 pieces of optical connector ferrule members with optical fiber core wires integrally bonded thereto were attached to a fixing jig of the optical connector end-face polishing machine and polished at an pressure contact angle of 30 degrees, at a rotational speed of 180 rpm and with a polishing width of about 20 mm. By the polishing width is herein meant a width in a radial direction of a ring-shaped polished mark remaining on the polishing film.

### (Example 2)

This Example is the same as the Example 1, except that a polishing film as used has, as a pH adjuster, ethylenediaminetetracetic acid with a concentration of 3 wt.% relative to a base mixture.

### (Example 3)

This Example is the same as the Example 1, except that a polishing film as used has, as a pH adjuster, ethylenediaminetetracetic acid with a concentration of 20 wt.% relative to a base mixture.

### (Example 4)

This Example is the same as the Example 1, except that a polishing film as used has, as a pH adjuster, tartaric acid with a concentration of 10 wt.% relative to a base mixture.

### (Example 5)

This Example is the same as the Example 1, except that a pH adjuster was not added to a polishing film, and supernatant liquid (pH: 4.0) of a mixture of ion exchange water and ethylenediaminetetracetic acid was used as a polishing fluid.

### (Example 6)

This Example is the same as the Example 1, except that diamond abrasive particles (IRM Series, manufactured by Tomei Diamond Co., Ltd., nominal particle size: 1 µm) were used as abrasive particles.

### (Comparative Example 1)

This Example is the same as the Example 1, except that a pH adjuster was not added to a polishing film, and ion exchange water was used as a polishing fluid.

### (Comparative Example 2)

This Example is the same as the Example 1, except that a pH adjuster was not added to a polishing film, and a mixture of ion exchange water and muriatic acid was used as a polishing fluid.

### (Comparative Example 3)

This Example is the same as the Example 1, except that a pH adjuster was not added to a polishing film, and a mixture of ion exchange water and sodium hydroxide was used as a polishing fluid.

### (Comparative Example 4)

This Example is the same as the Example 1, except that a pH adjuster was not added to a polishing film, and a mixture of ion exchange water and sulfuric oxide was used as a polishing fluid.

### (Evaluation)

Evaluation was made for each of the Examples and the Comparative Examples in the following manner.

### <pH>

The pH of each polishing fluid during it is used for polishing was measured by a pH meter (TwinpH, manufactured by Horiba, Ltd.).

### <Polishing Efficiency Deterioration Rate>

The amount reduced in one minute increment, of the length between a fixing plate on which an optical connector ferrule member is mounted and a leading end of the optical connector ferrule member was measured in each of an initial polishing stage and a later polishing stage, and the rate of the later stage relative to the initial stage was designated as the polishing efficiency deterioration rate.

### <Optical Fiber Surface Roughness>

The surface roughness of a machined surface of each optical connector ferrule member after polished was measured by the use of a ferrule end-face measuring machine (AC-3000, manufactured by Norland Products Inc.).

### <Surface Characteristics of an Object to be Polished>

The machined surface of each polished optical connector ferrule was observed on the screen of an optical photo machine (Video Fiber Microscope, manufactured by Westover Scientific, Inc.) and evaluation was made on flaws, roughness and the like of the polished surface of each optical fiber.

### (Evaluation Results)

The results on evaluation of the Examples 1 to 6 and the Comparative Examples 1 to 4 made according to the respective evaluation procedures mentioned above are shown in Table 1.

**[Table 1]**

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| | Portion Added | Polishing Film | Polishing Film | Polishing Film | Polishing Film | Polishing Fluid | Polishing Film | Nil | Polishing Fluid | Polishing Fluid | Polishing Fluid |
| pH Adjuster | Ethylenediaminetetracetic Acid (%) | 10 | 3 | 20 | | | 10 | | | | |
| | Tartaric Acid (%) | | | | 10 | | | | | | |
| Abrasive Particles | Nominal Particle Size (µm) | 3 | 3 | 3 | 3 | 3 | 1 | 3 | 3 | 3 | 3 |
| | Filling Rate (%) | 50 | 50 | 50 | 50 | 50 | 50 | 50 | 50 | 50 | 50 |
| Polishing Fluid | | Ion Exchange Water | Ion Exchange Water | Ion Exchange Water | Ion Exchange Water | Ion Exchange Water + Ethylenediaminetetracetic Acid* | Ion Exchange Water | Ion Exchange Water | Ion Exchange Water + Muriatic Acid | Ion Exchange Water + Sodium Hydroxide | Ion Exchange Water + Sulfuric Acid |
| Evaluation Results | | | | | | | | | | | |
| pH of Polishing Fluid in Polishing | | 4.0 | 5.5 | 3.0 | 4.0 | 4.0 | 4.0 | 7.0 | 4.0 | 9.0 | 1.0 |
| Polishing Efficiency Deterioration Rate | Initial Stage (µm/min.) | 6.6 | 5.8 | 7.4 | 5.3 | 6.2 | 3.1 | 5.4 | 8.5 | 7.3 | 6.9 |
| | Later Stage (µm/min.) | 6.3 | 5.3 | 7.0 | 5 | 5.9 | 3.1 | 4.1 | 8.0 | 4.7 | 6.4 |
| | Later Stage/Initial Stage | 0.95 | 0.91 | 0.95 | 0.94 | 0.95 | 1.00 | 0.76 | 0.95 | 0.64 | 0.93 |
| Surface Roughness of Optical Fiber (nm) | | 8 | 7 | 8 | 7 | 7 | 6 | 50 | 113 | 143 | 25 |
| Characteristics of Object to be Polished | | Good | Good | Good | Good | Good | Good | Rough Surface | Rough Surface | Rough Surface | Rough Surface |

| | | | | | | | | | | | |
|---|---|---|---|---|---|---|---|---|---|---|---|
| * Supernatant liquid is us | | | | | | | | | | | |

## Claims

1. A method of polishing an object with a polishing fluid interposed between a polishing film and the object, **characterized in that** polishing is performed while keeping a pH of the polishing fluid in a range of not less than 2 but less than 7 during the polishing fluid is used for polishing.

2. The method according to claim 1, wherein the pH of the polishing fluid is kept in a range of not less than 2 but less than 7 during the polishing fluid is used for polishing, by the use of a polishing fluid with a pH thereof having been previously adjusted by a pH adjuster.

3. The method according to claim 1 or 2, wherein the pH of the polishing fluid is kept in a range of not less than 2 but less than 7 during the polishing fluid is used for polishing, by the use of a polishing film containing a pH adjuster as the polishing film, and having the pH adjuster dissolved into the polishing fluid during the polishing fluid is used for polishing.

4. The method according to claim 2 or 3, wherein the pH adjuster comprises a substance containing a carboxyl group.

5. A polishing film having a substrate and a polishing layer that contains abrasive particles and a binder resin, said polishing layer formed on the substrate layer, **characterized in that** the polishing layer contains a pH adjuster for having a pH of a polishing fluid being in a range of not less than 2 but less than 7, in which the polishing fluid is interposed between the polishing film and an object to be polished.

6. The polishing film according to claim 5, **characterized in that** the pH adjuster comprises a substance containing a carboxyl group.

7. The polishing film according to claim 5 or 6, **characterized in that** the substance containing the carboxyl group is ethylenediaminetetracetic acid.

## Amended claims

### Amended claims under Art. 19.1 PCT

1. A polishing film having a substrate and a polishing layer that contains abrasive particles and a binder resin, said polishing layer formed on the substrate layer, **characterized in that** the polishing layer contains a pH adjuster for having a pH of a polishing fluid being in a range of not less than 2 but less than 7, in which the polishing fluid is interposed between the polishing film and an object to be polished, and the pH adjuster contains no halogen-containing acid.

2. The polishing film according to claim 1, **characterized in that** the pH adjuster comprises a substance containing a carboxyl group.

3. The polishing film according to claim 1, **characterized in that** the substance containing the carboxyl group is ethylenediaminetetracetic acid.

4. The polishing film according to claim 3, wherein the polishing layer contains the ethylenediaminetetracetic acid with a concentration of 3 to 20 wt.%.

5. The polishing film according to claim 3, wherein the ethylenediaminetetracetic acid contained in the polishing layer is in a powder form with a particle size of not more than 60 µm.

6. The polishing film according to claim 5, wherein the range of the particle size of the ethylenediaminetetracetic acid in the powder form is within 20 µm.

7. The polishing film according to claim 1, wherein the binder resin is polyester resin.

8. The polishing film according to claim 7, wherein the polyester resin is cross-linked by isocyanate and contained in the polishing layer.

9. The polishing film according to claim 3, wherein the ethylenediaminetetracetic acid is in a powder form with a particle sizes of not more than 60 µm and the binder resin is polyester resin.

10. The polishing film according to claim 9, wherein the range of the particle size of the ethylenediaminetetracetic acid in the powder form is within 20 µm.

11. The polishing film according to claim 9, wherein the polyester resin is cross-linked by isocyanate and contained in the polishing layer.

12. A method of manufacturing the polishing film of claim 9, comprising applying on a substrate a solution of a mixture of polyester resin, isocyanate, abrasive particles, powdered ethylenediaminetetracetic acid having a particle size of not more than 60 µm and solvent, and heating the same, thereby allowing the polyester resin to be cross-linked by the isocyanate so as to form a polishing layer.

13. The method of manufacturing the polishing film according to claim 12, wherein the range of the particle size of the powdered ethylenediaminetetracetic acid is within 20 µm.

14. A method of polishing an object with a polishing fluid interposed between a polishing film and the object, **characterized in that** polishing is performed while keeping a pH of the polishing fluid in a range of not less than 2 but less than 7 during the polishing fluid is used for polishing, in which the polishing fluid contains no halogen-containing acid.

15. The method according to claim 14, wherein the pH of the polishing fluid is kept in a range of not less than 2 but less than 7 during the polishing fluid is used for polishing, by the use of a polishing fluid with a pH thereof having been previously adjusted by a pH adjuster.

16. The method according to claim 14, wherein the pH of the polishing fluid is kept in a range of not less than 2 but less than 7 during the polishing fluid is used for polishing, by the use of a polishing film containing a pH adjuster as the polishing film, and having the pH adjuster dissolved into the polishing fluid during the polishing fluid is used for polishing.

17. The method according to claim 15, wherein the pH adjuster comprises a substance containing a carboxyl group.
